Europäisches Patentamt

European Patent Office

Office européen des brevets

(19)

(11) Veröffentlichungsnummer: **0 064 696**
A2

(12) # EUROPÄISCHE PATENTANMELDUNG

(21) Anmeldenummer: **82103707.4**

(22) Anmeldetag: **30.04.82**

(51) Int. Cl.³: **F 16 H 27/06**
//F16H55/06

(30) Priorität: **07.05.81 DE 3118079**

(43) Veröffentlichungstag der Anmeldung:
**17.11.82 Patentblatt 82/46**

(84) Benannte Vertragsstaaten:
**CH DE FR GB IT LI**

(71) Anmelder: **ROBERT BOSCH GMBH**
**Postfach 50**
**D-7000 Stuttgart 1(DE)**

(72) Erfinder: **Steinhäuser, Günter**
**Hauptstrasse 292 b**
**D-5060 Bergisch Gladbach(DE)**

(54) **Malteserkreuzgetriebe.**

(57) Das Schaltrad eines Malteserkreuzgetriebes soll billiger gefertigt werden können. Dazu werden die Sperrbögen mit einer Kunstharzschicht aufgefüttert, die durch Gießen aufgebracht wird.

EP 0 064 696 A2

VM 708
6.5.1981 Gl/han

ROBERT BOSCH GMBH, 7000 Stuttgart

Malteserkreuzgetriebe

Stand der Technik

Die Erfindung geht aus von einem Malteserkreuzgetriebe nach
der Gattung des Hauptanspruchs. Bei einem aus Metall, beispielsweise Grauguß oder Aluminium, gegossenen Schaltrad
eines Malteserkreuzgetriebes werden die mit dem Treiber oder
dem Sperrsegment in Berührung kommenden Gleitflächen durch
spanabhebendes Feinbearbeiten, wie Fräsen und Schleifen,
auf genaues Maß gebracht. Diese Maßnahme erfordert einen
hohen Arbeitsaufwand.

Vorteile der Erfindung

Das erfindungsgemäße Malteserkreuzgetriebe mit dem kennzeichnenden Merkmal des Hauptanspruchs hat demgegenüber den Vorteil,
daß der Arbeitsaufwand zum Formen maßhaltiger Sperrbögen sehr
niedrig ist und daß auf eine Schmierung der Sperrbögen verzichtet werden kann. Insbesondere ist der Bearbeitungsaufwand sehr niedrig, wenn die Sperrbögen am rohen oder roh bearbeiteten Schaltrad durch Ausgießen mit einem Gießharz in einer
Form geformt werden. Derartige Sperrbögen sind auch sehr maßgenau.

Zeichnung

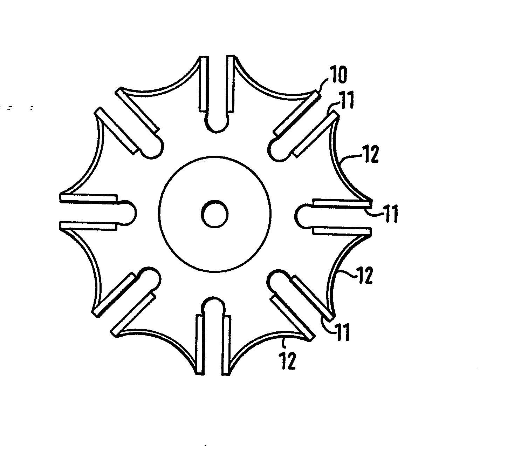

Ein Ausführungsbeispiel der Erfindung ist in der Zeichnung
dargestellt, die ein Malteserkreuz-Schaltrad in Draufsicht
zeigt, und in der nachfolgenden Beschreibung näher erläutert.

Beschreibung der Erfindung

Das Schaltrad 10 eines Malteserkreuzgetriebes für eine Verpackungsmaschine, das aus Grauguß hergestellt ist, hat mehrere radial sich erstreckende Mitnehmernuten 11 und zwischen
diesen am Umfang angeordnete konkave Sperrbögen 12. Die Mitnehmernuten 11 sind gefräst und auf Maß geschliffen, so daß
ein sauberer Lauf des eingreifenden Treibers gewährleistet
ist. Dagegen haben die Sperrbögen 12 zunächst Untermaß und
sind roh oder roh bearbeitet. In einer Gießform wird das Fehlmaß von etwa 3 Millimeter Dicke durch Ausgießen mit einem
aushärtenden Kunstharz ausgeglichen. Die die Sperrbögen 12
bildende Kunstharzschicht verbindet sich fest mit der Metalloberfläche, ist selbstschmierend und nimmt die Drücke eines
eingreifenden Sperrsegments überraschend gut auf. Durch Giessen der Kunstharzschicht in einer Gußform wird eine hohe Maßhaltigkeit erzielt.

VM 708
6.5.1981 Gl/han

ROBERT BOSCH GMBH, 7000 Stuttgart

Ansprüche

1. Malteserkreuzgetriebe mit einem Treiber und einem metallischen Schaltrad, das konkave Sperrbögen für den Eingriff eines mit dem Treiber verbundenen Sperrsegments hat,
dadurch gekennzeichnet, daß die Sperrbögen mit einer Schicht
aus einem standfesten, selbstschmierenden Kunstharz belegt
sind.

2. Malteserkreuzgetriebe nach Anspruch 1, dadurch gekennzeichnet, daß die rohen Sperrbögen am metallischen Schaltrad durch Formgießen mit einem aushärtenden Kunstharz aufgefüttert sind.

3. Malteserkreuzgetriebe nach Anspruch 1, dadurch gekennzeichnet, daß die roh bearbeiteten Sperrbögen am metallischen Schaltrad durch Formgießen mit einem aushärtenden
Kunstharz aufgefüttert sind.